# EUROPEAN PATENT APPLICATION

(11) **EP 2 840 721 A1**
(43) Date of publication of application: **25.02.2015**
(21) Application number: 13181520.1
(22) Date of filing: 23.08.2013
(51) Int. Cl.: H04B 7/08, G06F 5/06, H04H 60/11, H04B 7/12

(54) **Audio processing for frequency diversity receivers**

(71) Applicant: Harman Becker Automotive Systems GmbH, 76307 Karlsbad (DE)
(72) Inventor: Benz, Christoph, 77797 Ohlsbach (DE); Schmauderer, Philipp, 75339 Höfen (DE)
(74) Representative: Patentanwälte Westphal, Mussgnug & Partner

(57) **Abstract**

A frequency diversity receiving system and method for receiving a program broadcast coded on a multiplicity of broadcast carrier signals with different frequencies, comprising the following: receiving and decoding the program broadcast coded on one of the multiplicity of broadcast carriers at a time to provide a digital audio signal representative of the program broadcast with a first sampling rate; discretely storing in a buffer the audio signal with the first sampling rate for a given period of time to delay signal transfer and providing as an output a buffered audio signal with a controllable second sampling rate; and detecting a quantity representative or predictive of the fill level of the buffer and controlling the second sampling rate such that the second sampling rate is smaller than the first sampling rate if the buffer is in a condition in which its fill level decreases or is below a given level, or the second sampling rate is equal to the first sampling rate if the buffer is in a condition in which its fill level increases or is constant.

## Description

### TECHNICAL FIELD

The disclosure relates to a system and method (generally referred to as a "system") for processing audio signals.

### BACKGROUND

With frequency diversity, the same information may be transmitted using signals on multiple carrier frequencies so that when the information cannot be recovered from one of the signals, it might be recovered from one of the others. A common approach for reception in a frequency diversity system is to use two separate tuners and demodulator front ends. This approach, however, can be prohibitively costly. Sharing a single tuner and front end could save money and reduce the physical size of the receiver electronics, but may create performance problems since there may not be enough time for robust signal acquisition each time the received channel frequency needs to be changed. A frequency diversity reception system that provides the cost advantages of a single tuner system but mitigates the performance issues related to signal acquisition is desirable.

### SUMMARY

A frequency diversity receiver system for receiving a program broadcast coded on a multiplicity of broadcast carrier signals with different frequencies, comprising: a tuner configured to receive and decode the program broadcast coded on the multiplicity of broadcast carriers, the tuner being tunable to one of the multiplicity of broadcast carriers at a time to provide a digital audio signal representative of the program broadcast; a buffer coupled to the tuner, the buffer being configured to receive the audio signal from the tuner with a first sampling rate, discretely store the audio signal for a given period of time to delay signal transfer and provide as an output a buffered audio signal with a controllable second sampling rate; and processing circuitry coupled to the tuner and the buffer, the processing circuitry being configured to detect a quantity representative or predictive of the fill level of the buffer and to control the second sampling rate such that the second sampling rate is smaller than the first sampling rate if the buffer is in a condition in which its fill level decreases or is below a given level, or the second sampling rate is equal to the first sampling rate if the buffer is in a condition in which its fill level increases or is constant.

A frequency diversity receiving method for receiving a program broadcast coded on a multiplicity of broadcast carrier signals with different frequencies, comprising: receiving and decoding the program broadcast coded on one of the multiplicity of broadcast carriers at a time to provide a digital audio signal representative of the program broadcast with a first sampling rate; discretely storing in a buffer the audio signal with the first sampling rate for a given period of time to delay signal transfer and providing as an output a buffered audio signal with a controllable second sampling rate; and detecting a quantity representative or predictive of the fill level of the buffer and controlling the second sampling rate such that the second sampling rate is smaller than the first sampling rate if the buffer is in a condition in which its fill level decreases or is below a given level, or the second sampling rate is equal to the first sampling rate if the buffer is in a condition in which its fill level increases or is constant.

Other systems, methods, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and the related description. The components in the figures are not necessarily to scale, emphasis instead being placed upon illustrating the principles of the invention. Moreover, in the figures, like referenced numerals designate corresponding parts throughout the different views.

Figure 1 is a block diagram of an exemplary frequency diversity receiver system for receiving a program broadcast coded on a multiplicity of broadcast carrier signals with different frequencies, the system having an audio signal buffer.

Figure 2 is a block diagram of another exemplary frequency diversity receiver system having an audio signal buffer.

Figure 3 is a block diagram of an exemplary procedure of the storage condition of the audio signal buffer.

### DETAILED DESCRIPTION OF THE PREFERRED EMBODIMENTS

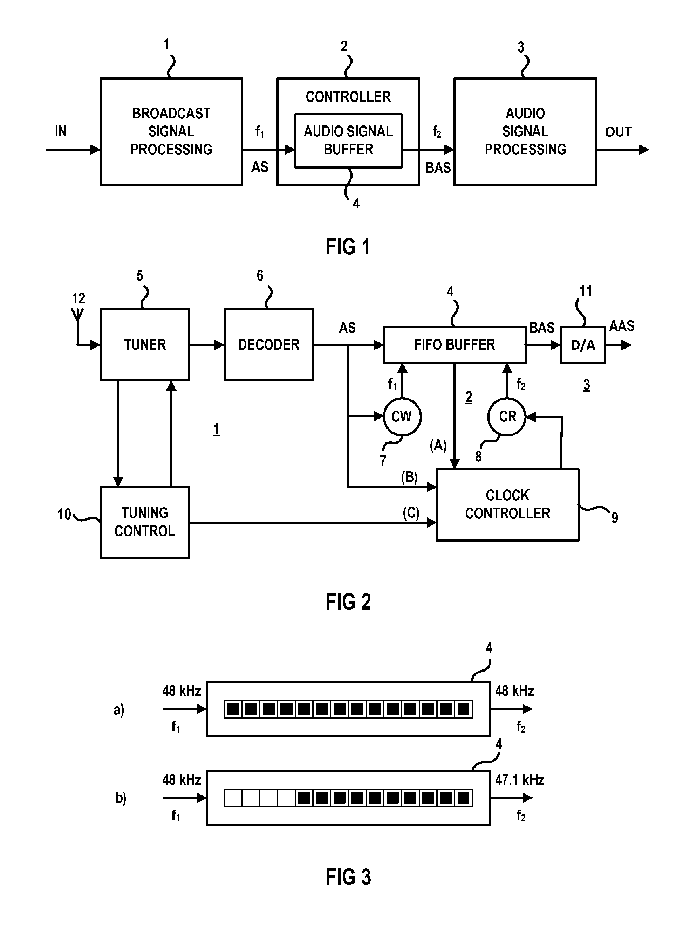

Figure 1 illustrates an exemplary frequency diversity receiver system for receiving a program broadcast coded on a multiplicity of broadcast carrier signals with different frequencies. The system may comprise a broadcast signal processing block 1, a subsequent controller block 2 and a further subsequent audio signal processing block 3. Controller block 2 may include or be connected to an audio signal buffer 4. For example, broadcast signal processing block 1 may include a receiver block for the reception of analog or digital modulated high-frequency carrier signals IN and for outputting at least one digital audio signal AS at a given first sampling rate f₁ (also referred to herein as "writing frequency"). The sampling rate, also known as sampling frequency or sample rate, defines the number of samples per unit of time (usually seconds) taken from a continuous signal to make a discrete signal. For time-domain signals, the unit for sampling rate is Hertz (inverse seconds, 1/s, s⁻¹). In digital audio, the most common sampling rates are 44.1 kHz, 48 kHz, 88.2 kHz, 96 kHz and 192 kHz. Audio signal AS is delayed by buffering (i.e., temporarily storing in a memory and then outputting) its discrete values through audio signal buffer (memory) 4 to output at a given second sampling rate f₂ (herein also referred to as "reading sampling rate" or "reading frequency") a buffered audio signal BAS, which is identical to audio signal AS except for the delay and, as the case may be, sampling rate f₂. Signal processing block 3 may include digital-to-analog conversion to provide an analog output signal OUT or any other suitable digital or analog signal processing such as filtering or amplifying.

Controller block 2 is configured to receive audio signals AS and output buffered audio signals BAS, wherein audio signal AS may be sampled with a sampling rate of 48 KHz (or any other suitable sampling rate) and a data width of, e.g., (8 or) 16 bits, and to transmit to audio signal processing block 3 buffered audio signals BAS with the data width of (8 or) 16 bits and sampling rate f₂, which may in the present example be 48 KHz or 47.1 KHz (or any other suitable sampling rates equal to or smaller than f₁), dependent on certain conditions. Audio signal buffer 4 within (or connected to) controller block 2 is configured to store the received audio signal AS and may be, for example, a random access memory (e.g., SRAM, DRAM, etc.), a shift register or a first-in-first-out (FIFO) register. Controller block 2 may be any type of dedicated or programmable processing unit or any other equivalent circuitry capable of executing the same functions. Audio processing block 3 may read buffered audio signal BAS from audio signal buffer 4 to perform audio processing.

If no signal is written into buffer 4, e.g., when the data stream of audio signal AS into buffer 4 is interrupted due to a search for other carrier frequencies that offer better reception quality for the desired program, a buffer underrun may occur due not to writing to but to reading from buffer 4. A data underrun threshold may be used to detect an underrun. When the data underrun threshold has been reached, controller block 2 may adjust the reading sample rate f₂ to a given lower value or adapt the reading frequency f₂ according to the storage condition (e.g., the reading sample rate f₂ will decrease with the actual fill level).

Controller 2 may set the data underrun threshold, for example, to a fill level of 75% of the storage space of audio signal buffer 4, but any other appropriate value is applicable as well. Controller 2 may set different thresholds for different broadcast signal processing blocks 1 and audio processing blocks 3, set the thresholds according to different operating frequencies (e.g., writing frequency f₁ and reading frequency f₂) and adjust the ratio of the data overrun threshold.

The data underrun threshold may be, for example, between 95% and 5% of the storage space of audio signal buffer 4, depending on the storage capacity (length, storage space) of buffer 4 and sampling rates f₁ and f₂. Buffer 4 has a length such that, in view of the data underrun threshold and sampling rates f₁ and f₂, a delay time is achieved that is sufficient for buffer 4 to search for alternative carriers and to tune to the best alternative carrier. In order to be unnoticeable to a listener, sampling rate f₂ may be smaller than sampling rate f₁ by less than 2%.

As can be seen, the system of Figure 1 implements a frequency diversity receiving method for receiving a program broadcast coded on a multiplicity of broadcast carrier signals with different frequencies, in which the program broadcast IN, coded on one of the multiplicity of broadcast carriers at a time, is received and decoded to provide the digital audio signal AS with sampling rate f₁. Then, audio signal AS is discretely stored, i.e., stored as discrete values, in buffer 4 for a given period of time to delay signal transfer. Any kind of storage and any kind of storing management may be employed as far as a desired delay time is achieved. Buffer 4 provides as an output buffered audio signal BAS with the controllable sampling rate f₂. In order to control sampling rate f₂, a quantity representative or predictive of the fill level of buffer 4 is detected, and sampling rate f₂ is controlled such that sampling rate f₂ is smaller than sampling rate f₁ if buffer 4 is in a condition in which its fill level decreases or is below a given level, or sampling rate f₂ is equal to sampling rate f₁ if buffer 4 is in a condition in which its fill level increases or is constant.

Referring now to Figure 2, another exemplary frequency diversity receiver system includes a tuner 5 that receives the program broadcast IN via an antenna 12. Program broadcast IN is modulated on a multiplicity of carriers, to one of which tuner 5 is tuned. A subsequent decoder block 7 demodulates and decodes program broadcast IN to provide digital audio signal AS, which is supplied to buffer 4, which is in the present case a first-in-first-out buffer. The (writing) sampling rate f₁ may be provided by a clock source 7, which may be controlled by the clock of audio signal AS and may change with the sampling rate of audio signal AS. The (reading) sampling rate f₂ may be provided by another clock source 8, which is controlled by a clock controller block 9.

In the present case, clock controller block 9 evaluates signals representative or predictive of the actual fill level of buffer 4, e.g., at least one of the following: the actual fill level (A), the actual data rate of audio signal AS (B) or a signal representative of the actual reception quality (C) provided by a tuning control block 10. The actual fill level (A) can be derived directly from buffer 4. Prediction of an upcoming underrun allows for shorter buffers since the (reading) sampling rate f₂ can be reduced just before the underrun actually occurs. An underrun can be predicted, for example, by evaluating the data rate of audio signal AS. If the data rate of the data to be written into buffer 4 is zero or almost zero, an underrun will occur in a certain amount of time, depending on the length of buffer 4 and the sampling rates f₁ and f₂. The same applies when evaluating the reception quality. If tuning control block 10 detects a quality level that is not sufficient for an undisturbed reception of the broadcast program, it will search for another, better carrier. This means the tuning control block knows when it will start a process and this information can be evaluated by clock controller 9 to predict a future underrun of buffer 4. Signals representative of the reception quality may be signals relating to the signal strength of the carrier signal or the bit error rate (BER) that occurs while decoding the carrier signal. The output of buffer 4, buffered audio signal BAS, may be converted into an analog signal AAS by a digital-to-analog converter 11.

As can be seen, tuner block 5, decoder block 6 and tuning control block 10 may form a broadcast signal processing block 1, as shown in Figure 1. Buffer 4, clock sources 7 and 8 and clock controller block 9 may form controller 2 of Figure 1, accordingly. Finally, digital-to-analog converter 11 may be part of an audio signal processing block 3, as shown in Figure 1.

Figures 2a and 2b illustrate an exemplary procedure of the storage condition detection of audio signal buffer 4. As illustrated in Figure 2a, the writing sampling rate f₁ may be identical to the reading sampling rate f₂ due to stable reception conditions. For example, the writing sampling rate f₁ to write the discrete values of audio signal AS into audio signal buffer 4 may be 48 kHz, and the reading sampling rate f₂ to read buffered audio signal BAS from audio signal buffer 4 may also be 48 kHz. As both sampling rates are the same, buffer 4 fills initially, and after a certain period time, in its steady state, is filled, as shown in Figure 2a. Assuming that tuning control block 10 now starts to look for a better carrier, the tuner output signal is muted and no data are transferred through decoder 6 to buffer 4. Then, as shown in Figure 2b, buffer 4 starts to empty as data are read out from buffer 4 but no data are written into buffer 4. When the fill level has decreased to a given threshold level, the reading sampling rate f₂ will be decreased, e.g., from 48 kHz to 47.1 kHz, to slow down the emptying process. When the better carrier is tuned in or the current carrier is maintained after a search routine for an optimal carrier, reading sampling rate f₂ will switch back to 48 kHz. Thus, the mute time can be reduced or even prevented.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A frequency diversity receiver system for receiving a program broadcast coded on a multiplicity of broadcast carrier signals with different frequencies, comprising:
a tuner configured to receive and decode the program broadcast coded on the multiplicity of broadcast carriers, the tuner being tunable to one of the multiplicity of broadcast carriers at a time to provide a digital audio signal representative of the program broadcast;
a buffer coupled to the tuner, the buffer being configured to receive the audio signal from the tuner with a first sampling rate, to discretely store the audio signal for a given period of time to delay signal transfer and to provide as an output a buffered audio signal with a controllable second sampling rate; and
processing circuitry coupled to the tuner and the buffer, the processing circuitry being configured to detect a quantity representative or predictive of the fill level of the buffer and to control the second sampling rate such that the second sampling rate is smaller than the first sampling rate if the buffer is in a condition in which its fill level decreases or is below a given level, or the second sampling rate is equal to the first sampling rate if the buffer is in a condition in which its fill level increases or is constant.

2. The system of claim 1, wherein the processing circuitry is further configured to detect a quantity representative or predictive of the fill level of the buffer by evaluating a signal representative of the reception quality of one of the carrier signals to which the tuner is currently tuned.

3. The system of claim 2, wherein the signal representative of the reception quality is the signal strength of the carrier signal or the bit error rate (BER) occurring while decoding the carrier signal.

4. The system of claim 1, wherein the processing circuitry is further configured to detect a quantity representative or predictive of the fill level of the buffer by evaluating the audio signal supplied to the buffer.

5. The system of claim 4, wherein, in order to detect the fill level of the buffer, the processing circuitry is further configured to detect a quantity representative or predictive of the signal level of the audio signal, to compare the audio level with a threshold level and to reduce the second sampling rate if the audio level is below the threshold level.

6. The system of claim 1, wherein the buffer comprises memory cells or register cells and the processing circuitry is further configured to detect a quantity representative or predictive of the fill level of the buffer by evaluating the number of memory cells or register cells in which discrete portions of the audio signal are stored or not stored.

7. The system of any of claims 1-6, wherein the second sampling rate is smaller than the first sampling rate by less than 2%.

8. The system of any of claims 1-7, wherein the buffer is a first-in-first-out (FIFO) register or memory.

9. A frequency diversity receiving method for receiving a program broadcast coded on a multiplicity of broadcast carrier signals with different frequencies, comprising:
receiving and decoding the program broadcast coded on one of the multiplicity of broadcast carriers at a time to provide a digital audio signal representative of the program broadcast with a first sampling rate;
discretely storing in a buffer the audio signal with the first sampling rate for a given period of time to delay signal transfer and providing as an output a buffered audio signal with a controllable second sampling rate; and
detecting a quantity representative or predictive of the fill level of the buffer and controlling the second sampling rate such that the second sampling rate is smaller than the first sampling rate if the buffer is in a condition in which its fill level decreases or is below a given level, or the second sampling rate is equal to the first sampling rate if the buffer is in a condition in which its fill level increases or is constant.

10. The method of claim 9, further comprising detection of a quantity representative or predictive of the fill level of the buffer by evaluating a signal representative of the reception quality of one of the carrier signals on which the broadcast is received at a time.

11. The method of claim 10, wherein the signal representative of the reception quality is the signal strength of the carrier signal or the bit error rate (BER) occurring while decoding the carrier signal.

12. The method of claim 9, further comprising the detection of a quantity representative or predictive of the fill level of the buffer by evaluating the audio signal supplied to the buffer.

13. The method of claim 12, further comprising detection of a quantity representative or predictive of the fill level of the buffer by detecting the signal level of the audio signal, comparing the audio level with a threshold level and reducing the second sampling rate if the audio level is below the threshold level.

14. The method of claim 9, wherein the buffer comprises memory cells or register cells and the method further comprises detection of a quantity representative or predictive of the fill level of the buffer by evaluating the number of memory cells or register cells in which discrete portions of the audio signal are stored or not stored.

15. The method of any of claims 9-14, wherein the second sampling rate is smaller than the first sampling rate by less than 2%.
